# DEMANDE DE BREVET EUROPEEN

(11) **EP 1 388 736 A1**
(43) Date de publication de la demande: **11.02.2004**
(21) Numéro de dépôt: 03291850.0
(22) Date de dépôt: 25.07.2003
(51) Int. Cl.: G01P 1/02, G01P 3/44, H01R 13/66, G01D 11/24

(54) **Système intègre de fixation et de connexion d'un capteur**

(30) Priorité: 07.08.2002 FR 0210052
(71) Demandeur: S.N.R. ROULEMENTS, 74010 Annecy Cédex (FR)
(72) Inventeur: Ulrici, Christophe, 74960 Cran-Gevrier (FR); Noury, Cathy, 74000 Annecy (FR); Corlet, Fabien, 74000 Annecy (FR)
(74) Mandataire: Geismar, Thierry

(57) **Abrégé**

L'invention concerne un système de fixation d'un capteur d'informations (1) en regard et à distance d'entrefer du codeur (2) d'un roulement, ledit système comprenant un capot (3) destiné à être associé à une bague (4) dudit roulement en recouvrant au moins partiellement le codeur (2), dans lequel, en combinaison, le capot (3) comprend au moins un dispositif de fixation du capteur (1) sur la face interne dudit capot et un dispositif de connexion électrique dudit capteur.

L'invention concerne également un capteur (1) destiné à être fixé à un tel système, un ensemble formé par le système de fixation et le capteur (1) associé, ainsi qu'un roulement équipé d'un tel ensemble.

## Description

L'invention concerne un système de fixation d'un capteur d'informations en regard et à distance d'entrefer du codeur d'un roulement, un capteur destiné à être fixé à un tel système, un ensemble formé par le système de fixation et le capteur associé, ainsi qu'un roulement équipé d'un tel ensemble.

De tels roulements, lorsqu'ils sont équipés d'un capteur de vitesse de rotation, de position angulaire et/ou de sens de rotation, peuvent notamment être employés pour les roues de véhicules automobiles qui sont pourvus de système anti-blocage desdites roues. En effet, les informations sont alors utilisées par un calculateur d'assistance au freinage.

Un des problèmes qui se pose avec de tels roulements concerne la fixation du capteur en regard et à distance d'entrefer du codeur générant les impulsions qu'il doit détecter. En effet, notamment dans les technologies de détection de type magnétique, le contrôle de l'entrefer commande directement la qualité du signal détecté.

On connaît, par exemple du document EP-0 743 526, l'intégration d'un capteur dans un connecteur détachable, ledit connecteur étant destiné à être disposé dans un logement prévu dans un capot associé au roulement.

Ce type de solution présente de nombreux inconvénients. En effet, la position relative du capteur par rapport au codeur, et donc le contrôle de l'entrefer, dépend des tolérances de fabrication respectivement du connecteur et du logement ainsi que du positionnement relatif de ces deux éléments. Or, notamment dans le cadre d'une application de sécurité telle que l'assistance au freinage, les tolérances mécaniques ne permettent pas d'assurer une précision suffisante pour le contrôle de l'entrefer.

En outre, le connecteur étant détachable, la fiabilité de la fixation, en particulier dans un environnement sévère tel que celui des roues de véhicule automobile, ne peut pas être garantie, notamment en cas de choc.

Par ailleurs, le capot comprenant un logement dans lequel le connecteur est disposé, les fonctions d'étanchéité et de protection du codeur sont assurées par le capot avec une fiabilité insuffisante.

En outre, la solution exposée ci-dessus nécessite d'adapter les dimensions de l'ensemble capot / connecteur / capteur à chaque dimension de roulement, ce qui va à l'encontre des contraintes de normalisation qui sont présentes dans l'industrie automobile.

On connaît par ailleurs du document US-6 203 204 un montage dans lequel un capteur est surmoulé dans un capot de roulement. L'un des problèmes de ce montage concerne le surmoulage du capteur avec sa connectique qui ne permet pas de contrôler de façon suffisamment fiable le positionnement du capteur dans le capot, d'où une maîtrise insuffisante de l'entrefer.

L'invention vise à résoudre ces inconvénients en proposant notamment un système de fixation d'un capteur sur un roulement qui intègre, en une seule pièce, les fonctions fixation et connexion électrique dudit capteur, et ce en assurant une étanchéité optimale et une standardisation des moyens de fixation et de connexion ainsi que du capteur pour un ensemble de dimensions de roulements.

A cet effet, et selon un premier aspect, l'invention propose un système de fixation d'un capteur d'informations en regard et à distance d'entrefer du codeur d'un roulement, ledit système comprenant un capot destiné à être associé à une bague dudit roulement en recouvrant au moins partiellement le codeur, dans lequel, en combinaison, le capot comprend au moins un dispositif de fixation du capteur sur la face interne dudit capot et un dispositif de connexion électrique dudit capteur avec une unité destinée à traiter les informations détectées, ledit dispositif de connexion comprenant des moyens internes de connexion agencés pour interagir avec des moyens complémentaires de connexion prévus sur le capteur, et, connectés aux dits moyens internes, des moyens externes de connexion agencés pour permettre la lecture des informations détectées. Le dispositif de fixation comprend un logement dans lequel le capteur est destiné à être fixé, ledit logement étant pourvu de moyens de fixation dudit capteur.

Selon un deuxième aspect, l'invention propose un capteur destiné à être fixé sur le capot d'un tel système de fixation, ledit capteur comprenant des moyens complémentaires de connexion électrique destinés, une fois le capteur fixé sur le capot, à coopérer avec les moyens internes de connexion électrique du capot, de sorte à établir la connexion entre ledit capteur et l'unité par l'intermédiaire des moyens externes de connexion.

Selon un troisième aspect, l'invention propose un ensemble comprenant un tel système de fixation et, fixé et connecté sur le capot dudit système, un tel capteur.

Selon un quatrième aspect, l'invention propose un roulement du type comprenant une bague fixe, une bague tournante et des corps roulants disposés entre lesdites bagues, dans lequel un codeur générateur d'impulsions est associé à la bague tournante, ledit roulement étant caractérisé en ce qu'il est équipé d'un tel ensemble, le capot dudit ensemble étant associé à la bague fixe.

D'autres objets et avantages de l'invention apparaîtront au cours de la description qui suit, faite en référence aux dessins annexés, dans lesquels :
- les figures 1 et 2 sont des vues en perspective respectivement de face et d'arrière d'un système de fixation, suivant un mode de réalisation ;
- la figure 3 est une vue partielle de la figure 1 montrant le capteur fixé sur le capot de sorte à former un ensemble selon un mode de réalisation ;
- la figure 4 est une vue analogue à la figure 3 montrant l'ensemble selon un autre mode de réalisation ;
- la figure 5 est une vue en perspective de face d'un système de fixation suivant un autre mode de réalisation, ladite figure montrant également le capteur avant sa fixation sur le capot ;
- la figure 6 est une vue en coupe partielle de la figure 5 selon un plan radial coupant le dispositif de fixation, le capteur étant fixé sur le capot ;
- la figure 7 est une vue analogue à la figure 6, montrant un autre mode de réalisation de la fixation du capteur dans le système de fixation ;
- la figure 8 est un schéma en coupe montrant un mode de réalisation du dispositif de connexion du système de fixation ainsi que des moyens complémentaires de connexion du capteur ;
- la figure 9 est un schéma analogue à la figure 8, selon un autre mode de réalisation du dispositif de connexion et du capteur ;
- la figure 10 est une vue en perspective de face d'un système de fixation, selon un mode de réalisation ;
- la figure 11 est une vue en coupe longitudinale de la figure 10, selon un plan radial coupant le dispositif de fixation ;
- la figure 12 est une vue en coupe longitudinale d'un roulement selon un mode de réalisation ;
- la figure 13 est une vue en perspective de face d'un système de fixation, suivant un autre mode de réalisation ;
- les figures 14a et 14b sont des vues en perspective respectivement de face et d'arrière d'un capteur destiné à être fixé dans un système selon la figure 13;
- la figure 15 est une vue analogue à la figure 13 montrant le capteur des figures 14 fixé au système de sorte à former un ensemble selon un autre mode de réalisation.

En relation avec les figures, on décrit un système de fixation d'un capteur d'informations 1 en regard et à distance d'entrefer du codeur 2 d'un roulement, ledit système comprenant un capot 3 destiné à être associé à une bague 4 dudit roulement.

Dans les modes de réalisation représentés, le capot 3 est formé d'une pièce annulaire comprenant un disque radial 3a et une jupe cylindrique axiale 3b qui est prolongée par une portée cylindrique axiale 3c d'emmanchement du système sur la bague 4 du roulement.

Dans la description, les termes « externe » et « interne » sont définis par rapport aux cotés du capot 3 respectivement opposé et en regard du roulement lorsque ledit capot est monté sur ledit roulement, le terme « axial » est défini par rapport à un plan parallèle à l'axe de rotation du roulement, le terme « radial » est défini par rapport à un plan perpendiculaire à cet axe de rotation.

Le capot 3 est agencé pour recouvrir au moins partiellement le codeur 2 de sorte à assurer une fonction de protection de celui-ci, notamment vis à vis des projections d'eau et de boue pouvant intervenir dans une application du roulement pour la rotation d'une roue de véhicule automobile.

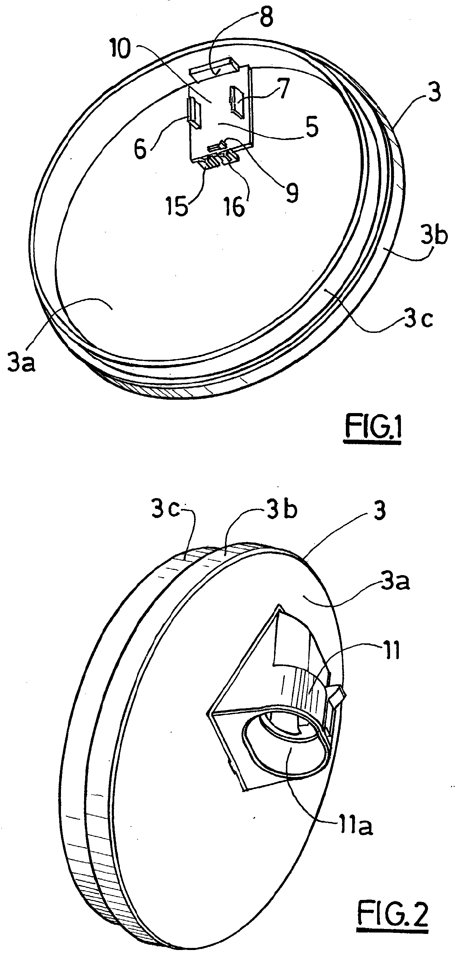

En relation avec les figures 1 à 9 et 13 à 15, on décrit des systèmes de fixation comprenant un dispositif de fixation du capteur 1 sur la face interne du capot 3 et un dispositif de connexion électrique dudit capteur avec une unité (non représentée) destinée à traiter les informations détectées. Le dispositif de connexion comprend des moyens internes de connexion agencés pour interagir avec des moyens complémentaires de connexion prévus sur le capteur 1, et, connectés aux dits moyens internes, des moyens externes de connexion agencés pour permettre la lecture des informations détectées.

Ainsi, le système de fixation intègre, en une seule pièce, d'une part les moyens de fixation du capteur et d'autre part les moyens de connexion électrique, ce qui permet de résoudre les problèmes de l'art antérieur qui sont liés à l'utilisation de deux éléments interagissant mécaniquement entre eux.

En outre, le capot 3 peut être obtenu facilement et pour un coût limité, par exemple par moulage plastique.

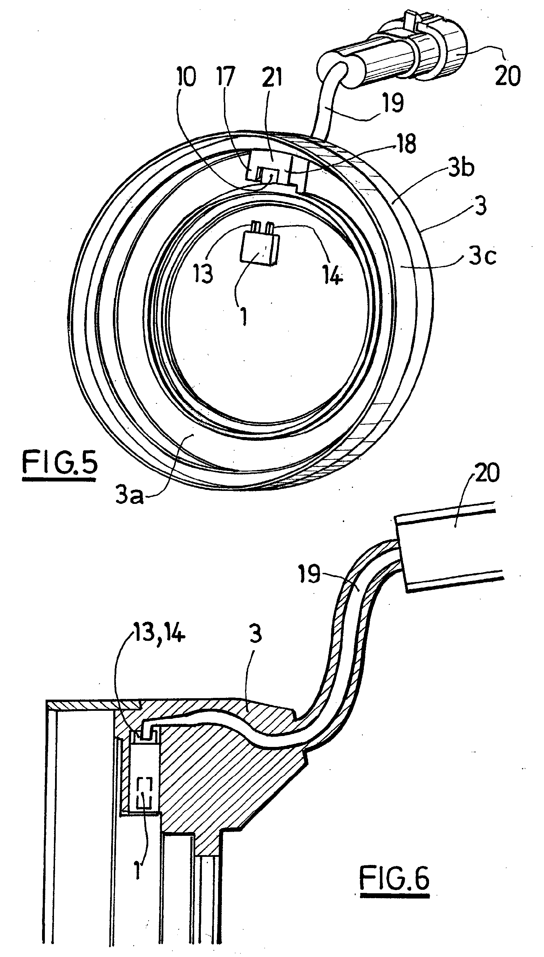

Sur les figures 1 à 4 est représenté un système de fixation dans lequel le disque 3a est plein, ce qui correspond typiquement à un système de fixation pour roue non-motrice d'un véhicule automobile, alors que sur les figures 5 à 7, le disque 3b comprend un alésage central agencé pour permettre le passage d'un bol de transmission d'une roue motrice.

Sur les figures 1 à 3, le dispositif de fixation est prévu sur la face interne du disque 3a de sorte à permettre une lecture faciale des informations. Le dispositif de fixation comprend une plaque support 5 associée au disque 3a, ladite plaque portant quatre languettes axiales 6-9 formant entre elles un logement ouvert 10 dont la taille est agencée pour recevoir le capteur 1. A cet effet, deux languettes opposées 6, 7 sont élastiques et agencées pour permettre le clipsage du capteur 1 à l'intérieur dudit logement. En variante, la plaque 5 et les languettes 6-9 peuvent être moulées en une seule pièce avec le disque 3a.

Sur la figure 2 sont représentés les moyens externes de connexion qui comprennent un connecteur 11 prévu sur la face externe du disque 3a, ledit connecteur étant par exemple moulé sur ladite face externe de sorte à ne pas altérer l'étanchéité conférée par le capot 3.

Le connecteur 11 est agencé pour recevoir, de façon réversible, une prise de l'unité destinée à traiter les informations détectées. A cet effet, le connecteur 11 comprend un logement 11 a dans lequel sont prévues des broches de connexion 11b qui sont reliées électriquement aux moyens internes de connexion.

Le système de fixation permet donc d'une part de détecter les informations du coté interne du capot 3 et d'autre part de rendre accessible ces informations du coté externe du capot 3. Cette réalisation est particulièrement avantageuse en ce qu'elle permet de limiter les contraintes d'intégration du capteur 1 tout en assurant une étanchéité optimale entre l'intérieur et l'extérieur du roulement.

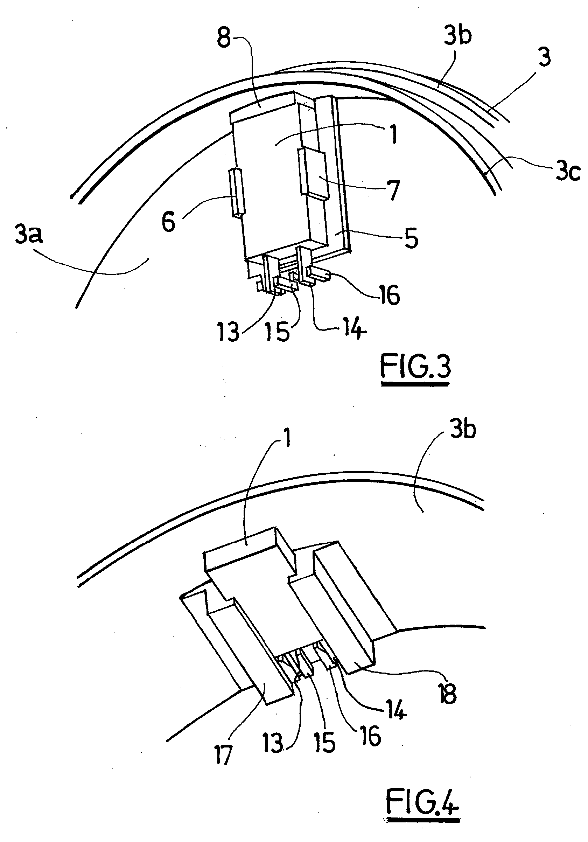

Sur la figure 3 est représenté un capteur 1 fixé au système de fixation de la figure 1. Le capteur 1 comprend des moyens complémentaires de connexion électrique destinés, une fois le capteur 1 fixé sur le capot 3, à coopérer avec les moyens internes de connexion électrique du capot 3, de sorte à établir la connexion entre ledit capteur et l'unité par l'intermédiaire des moyens externes de connexion.

Le capteur 1 comprend un corps en matériau plastique, de forme parallélépipédique, dans lesquels les moyens de détection 33 sont surmoulés avec les moyens complémentaires de connexion saillant dudit corps.

Sur la figure 3, les moyens complémentaires de connexion sont formés de deux pattes 13, 14 destinées, lors de la fixation du capteur 1 sur le capot 3, à venir s'engager chacune dans deux connecteurs 15, 16 en forme de U dont la base est associée sur la face interne du capot 3 et dont les deux branches sont agencées pour recevoir et connecter respectivement une patte de connexion 13, 14. Cette réalisation permet en outre, du fait de l'introduction en force des pattes 13, 14 dans les connecteurs 15, 16, d'améliorer la fixation du capteur 1 dans le logement 10. En variante, les connecteurs 15, 16 peuvent être partiellement enrobés par le plastique du capot 3 de sorte à les protéger de la pollution extérieure.

En relation avec la figure 4, on décrit un autre mode de réalisation du système de fixation dans lequel les moyens de fixation comprennent deux glissières 17, 18 destinées à coopérer avec des formes complémentaires prévues sur le capteur 1, à savoir les bords opposés dudit capteur qui est analogue à celui représenté sur la figure 3. Les moyens internes de connexion comprennent également des connecteurs 15, 16 en forme de U qui sont couchés de sorte à assurer la réception des pattes 13, 14 lors de la translation du capteur 1 dans les glissières 17, 18. En outre, dans le mode de réalisation de la figure 4, le dispositif de fixation est associé à la face interne de la jupe 3b de sorte à permettre une lecture radiale des informations.

En relation avec les figures 5 à 7, on décrit la fixation d'un capteur 1 analogue à celui décrit précédemment dans un système de fixation comprenant des moyens externes de connexion formés d'un fil 19 surmoulé dans le capot 3, l'extrémité dudit fil opposée aux moyens internes de connexion étant pourvue d'un connecteur 20. Cette réalisation, du fait du surmoulage, permet également de rendre accessible les informations sur la face externe du capot 3 tout en n'altérant pas l'étanchéité dudit capot.

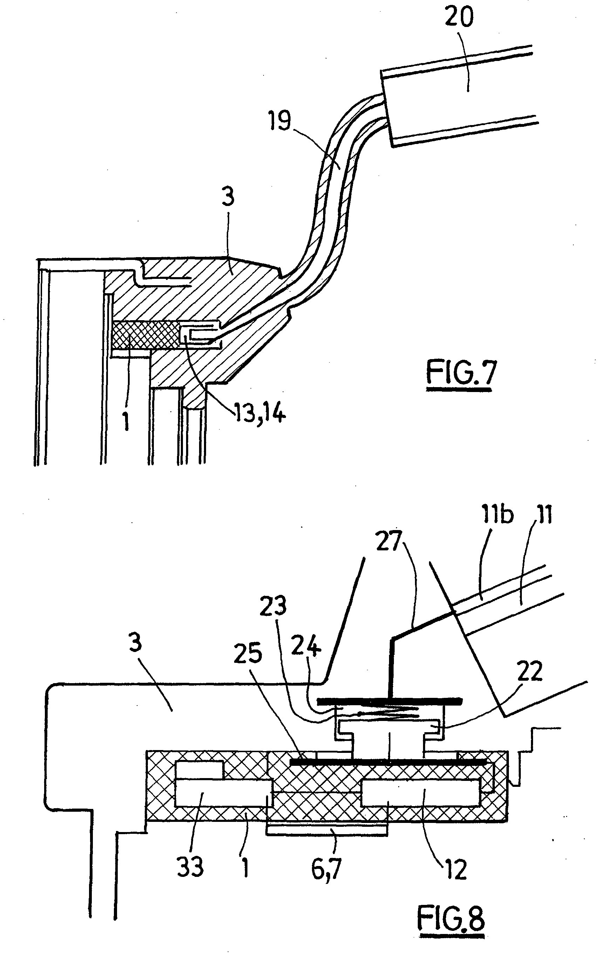

Sur les figures 5 et 6, le dispositif de fixation est prévu sur la face interne du disque 3a de sorte à permettre une lecture faciale des informations, alors que sur la figure 7, le dispositif de fixation est prévu sur la face interne de la jupe 3b de sorte à permettre une lecture radiale des informations.

De même que dans le mode de réalisation précédent, le dispositif de fixation comprend un logement 10 dans lequel le capteur 1 est inséré par coulissement de sorte à assurer sa fixation et sa connexion aux moyens externes de connexion. Sur la figure 5, les deux glissières 17, 18 sont partiellement reliées entre elles de sorte à former une paroi 21 fermant partiellement le logement 10.

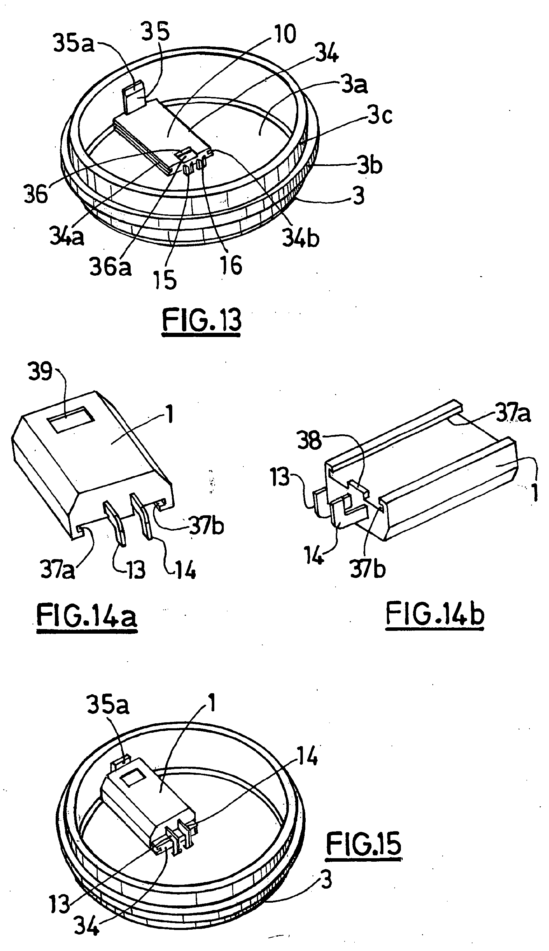

Sur la figure 13 est représenté un autre mode de réalisation d'un dispositif de fixation comprenant un logement 10 dans lequel le capteur 1 est inséré et fixé par coulissement. Le dispositif comprend une plaque support 34 associée au disque 3a, ladite plaque comprenant deux glissières latérales 34a, 34b . La plaque 34 comprend en outre une languette élastique arrière 35 et une cavité 36 avant définissant entre elles le logement 10. Par ailleurs, le dispositif comprend deux connecteurs 15, 16 associés au disque 3a au voisinage de la face avant de la plaque 34.

Un capteur 1 tel que celui représenté sur les figures 14 est destiné à être inséré dans le logement 10 par coulissement sur la plaque 34. A cet effet, le capteur 1 comprend sur sa face arrière deux glissières complémentaires 37a, 37b et un saillie 38 destiné à venir se loger dans la cavité 36.

En fin de coulissement le capteur 1 est clipsé sur la plaque 34. Pour ce faire, la cavité 36 est pourvue d'une languette élastique 36a qui est déplacée par le coulissement de la saillie 38 contre elle, ladite languette étant agencée pour loger la saillie 38 entre elle et la face avant de la cavité 36. Par ailleurs, la languette arrière 35 comprend une saillie supérieure 35a qui est destiné, en fin de coulissement, à venir s'engager sur la surface supérieure du capteur 1 (voir figure 15).

Le capteur 1 comprend également deux pattes incurvées 13, 14 qui sont agencées pour venir s'engager respectivement dans un connecteur 15, 16 lorsque le capteur 1 est fixé.

Dans le mode de réalisation représenté sur les figures 14a et 15, le capteur 1 est de forme sensiblement parallélépipédique et sa face supérieure est pourvue d'une fenêtre de lecture 39 en regard de laquelle les moyens de détection sont disposés.

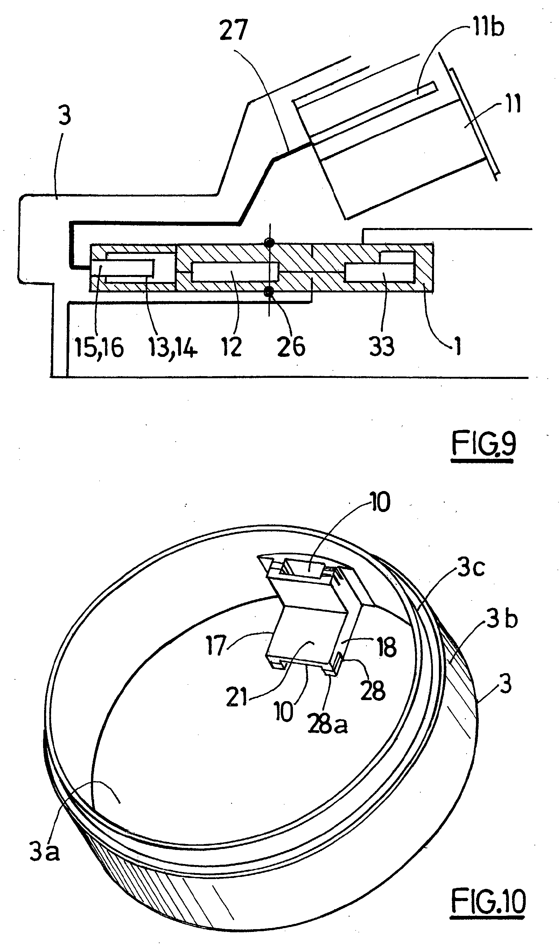

Sur la figure 8, sont représentés des moyens internes de connexion comprenant deux contacteurs 22 montés en translation par l'intermédiaire d'un ressort 23, respectivement dans un logement 24 prévu dans la face interne de la jupe 3b. Ainsi, sous l'action de la fixation du capteur 1, les contacteurs 22 passent d'une position de repos dans laquelle le contacteur 22 obture le logement 24 à une position de connexion. Cette réalisation permet d'améliorer d'une part l'étanchéité au niveau des contacteurs 22 et d'autre part le contact électrique entre le capteur 1 et les moyens internes de connexion.

Les moyens complémentaires de connexion sont formés de deux plaques 25 destinées, lors de la fixation du capteur 1 sur le capot 3, à venir en appui chacune sur un contacteur 22. A cet effet, les plaques 25 sont surmoulées dans le corps du capteur 1 de sorte à être associées à lui et à laisser une de leurs faces libre.

Sur la figure 9 est représenté un capteur 1 dont le corps est pourvu d'un joint torique 26 de sorte à assurer une étanchéité lorsque le capteur 1 est disposé dans le logement 10 du dispositif de fixation.

Dans les réalisations des figures 8 et 9, les moyens externes de connexion sont formés d'un connecteur 11 dont les broches 11 b sont reliées par un fil 27 aux moyens internes de connexion.

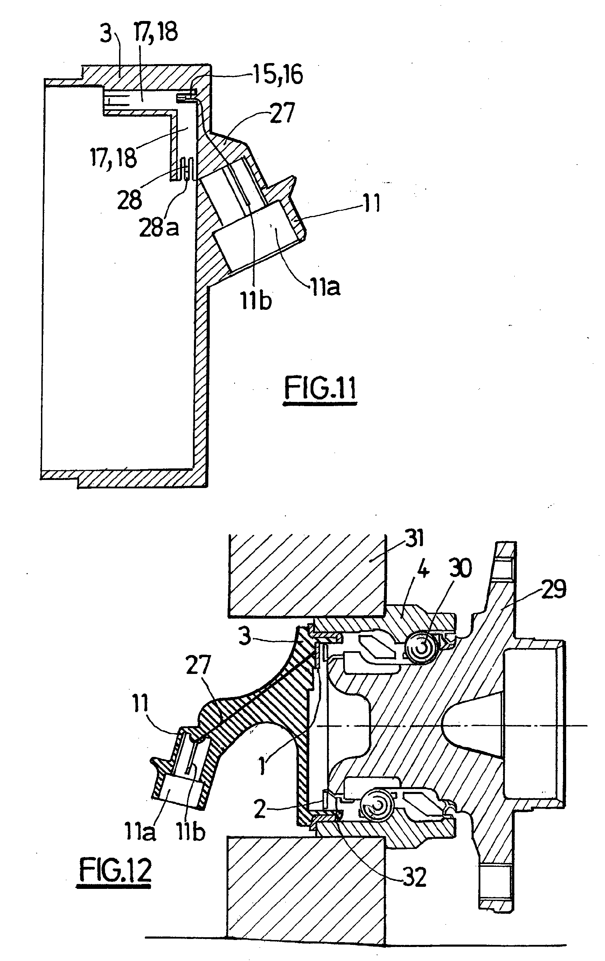

Sur les figures 10 et 11 est représenté un système de fixation comprenant deux dispositifs de fixation qui sont prévus respectivement sur la face interne du disque 3a et sur la face interne de la jupe 3b, le dispositif de connexion étant agencé pour permettre la connexion du capteur 1 disposé dans l'un ou dans l'autre des dispositifs de fixation.

Cette réalisation, en prévoyant deux logements 10 disposés perpendiculairement l'un par rapport à l'autre, permet de prévoir une lecture faciale et une lecture radiale des informations, le choix entre ces deux modes de lecture étant réalisé lors de la fixation du capteur 1 sur le système.

Dans le mode de réalisation représenté, chacun des moyens de fixation comprend deux glissières 17, 18 pourvues chacune d'une languette élastique 28 munie d'une saillie 28a au voisinage de son extrémité, lesdites languettes étant destinées, en fin de glissement du capteur 1, à permettre son clipsage.

Sur la figure 12 est représenté un roulement du type comprenant une bague extérieure fixe 4, une bague intérieure tournante 29, formé d'une fusée de roue non-motrice d'un véhicule automobile, et des corps roulants 30 disposés entre lesdites bagues, dans lequel un codeur 2 générateur d'impulsions est associé à la bague tournante 29. Le roulement est équipé d'un ensemble comprenant un système de fixation et un capteur 1, le capot 3 dudit ensemble étant associé à la bague fixe 4 qui est emmanchée dans l'alésage d'une structure fixe 31.

Le codeur 2 est formé d'un anneau magnétique multipolaire sur lequel est aimantée une pluralité de paires de pôles Nord et Sud équiréparties, ledit codeur étant associé à la bague intérieure 29 par l'intermédiaire d'une armature 32 qui est emmanchée sur ladite bague.

Dans un exemple particulier, le capteur 1 comprend des éléments sensibles 33 qui sont choisis dans le groupe comprenant les sondes à effet Hall, les magnétorésistances, les magnétorésistances géantes, lesdits éléments étant surmoulés dans le capteur 1 avec les moyens électroniques 12 adéquats.

En variante, il est également possible d'utiliser une technologie de type optique en prévoyant un codeur 2 formé d'une cible en métal ou en verre sur laquelle des motifs sont gravés, et des éléments sensibles 33 formés de détecteurs optiques.

Dans ces deux cas, il est alors connu de traiter les informations détectées par le capteur 1 de sorte à en déduire notamment la vitesse de rotation, la position angulaire et/ou le sens de rotation de la bague intérieure 29 par rapport à la bague extérieure 4, c'est-à-dire de la roue par rapport au sol.

Le roulement selon l'invention est donc parfaitement étanchéifié par la présence du capot 3, ce qui permet notamment de protéger le codeur 2 de la pollution. Par ailleurs, la fixation du capteur 1 en regard et à distance d'entrefer du codeur 2 est assurée de façon particulièrement fiable. En outre, seul la dimension du capot 3 doit être adaptée à la dimension du roulement, le capteur 1 ainsi que les dispositifs de fixation et de connexion pouvant demeurer identiques.

## Revendications

1. Système de fixation d'un capteur d'informations (1) en regard et à distance d'entrefer du codeur (2) d'un roulement, ledit système comprenant un capot (3) destiné à être associé à une bague (4) dudit roulement en recouvrant au moins partiellement le codeur (2), dans lequel, en combinaison, le capot (3) comprend au moins un dispositif de fixation du capteur (1) sur la face interne dudit capot et un dispositif de connexion électrique dudit capteur avec une unité destinée à traiter les informations détectées, ledit dispositif de connexion comprenant des moyens internes de connexion agencés pour interagir avec des moyens complémentaires de connexion prévus sur le capteur (1), et, connectés aux dits moyens internes, des moyens externes de connexion agencés pour permettre la lecture des informations détectées, **caractérisé en ce que** le dispositif de fixation comprend un logement (10) dans lequel le capteur (1) est destiné à être fixé, ledit logement étant pourvu de moyens de fixation dudit capteur.

2. Système selon la revendication 1, **caractérisé en ce que** le capot (3) est formé d'une pièce annulaire comprenant un disque radial (3a) et une jupe cylindrique axiale (3b) qui est prolongée par une portée cylindrique axiale (3c) d'emmanchement dudit système sur la bague (4) du roulement.

3. Système selon la revendication 2, **caractérisé en ce que** le disque (3a) comprend un alésage central.

4. Système selon la revendication 2 ou 3, **caractérisé en ce qu'**un dispositif de fixation est prévu sur la face interne du disque (3a) ou sur la face interne de la jupe (3b).

5. Système selon la revendication 2 ou 3, **caractérisé en ce que** deux dispositifs de fixation sont prévus respectivement sur la face interne du disque (3a) et sur la face interne de la jupe (3b), le dispositif de connexion étant agencé pour permettre la connexion du capteur (1) disposé dans l'un ou dans l'autre des dispositifs de fixation.

6. Système selon l'une quelconque des revendications 1 à 5, **caractérisé en ce que** les moyens de fixation comprennent des languettes élastiques (6, 7 ; 28 ; 35, 36a) agencées pour permettre le clipsage du capteur (1) à l'intérieur du logement (10).

7. Système selon l'une quelconque des revendications 1 à 6, **caractérisé en ce que** les moyens de fixation comprennent deux glissières (17, 18 ; 34a, 34b) destinées à coopérer avec des formes complémentaires prévues sur le capteur (1 ), de sorte à permettre l'insertion et la fixation du capteur (1 ) dans le logement (10) par coulissement.

8. Système selon l'une quelconque des revendications 1 à 7, **caractérisé en ce que** les moyens internes de connexion comprennent deux connecteurs (15, 16) en forme de U dont la base est associée sur la face interne du capot (3) et dont les deux branches sont agencées pour recevoir et connecter une patte de connexion (13, 14) prévue sur le capteur (1 ).

9. Système selon l'une quelconque des revendications 1 à 7, **caractérisé en ce que** les moyens internes de connexion comprennent deux contacteurs (22) montés en translation respectivement dans un logement (24) prévu dans la face interne du capot (3), entre une position de repos dans laquelle le contacteur (22) obture le logement (24) et une position de connexion, le passage d'une position à l'autre se faisant sous l'action de la fixation du capteur (1 ).

10. Système selon l'une quelconque des revendications 1 à 9, **caractérisé en ce que** les moyens externes de connexion comprennent un connecteur (11) prévu sur la face externe du capot (3).

11. Système selon l'une quelconque des revendications 1 à 9, **caractérisé en ce que** les moyens externes de connexion comprennent un fil surmoulé (19) dans le capot (3), l'extrémité dudit fil opposée aux moyens internes de connexion étant pourvue d'un connecteur (20).

12. Capteur (1) destiné à être fixé sur le capot (3) d'un système de fixation selon l'une quelconque des revendications 1 à 11, **caractérisé en ce qu'**il comprend des moyens complémentaires de connexion électrique destinés, une fois le capteur (1) fixé sur le capot (3), à coopérer avec les moyens internes de connexion électrique du capot (3), de sorte à établir la connexion entre ledit capteur et l'unité par l'intermédiaire des moyens externes de connexion.

13. Capteur selon la revendication 12, **caractérisé en ce qu'**il comprend un corps en matériau plastique dans lesquels les moyens de détection (33) sont surmoulés avec les moyens complémentaires de connexion saillant dudit corps.

14. Capteur selon la revendication 12 ou 13, **caractérisé en ce qu'**il est de forme sensiblement parallélépipédique.

15. Capteur selon l'une quelconque des revendications 12 à 14, **caractérisé en ce que** les moyens complémentaires de connexion sont formés de deux pattes (13, 14) destinées, lors de la fixation du capteur (1) sur le capot (3), à venir s'engager chacune dans les moyens internes de connexion.

16. Capteur selon la revendication 12, **caractérisé en ce que** les moyens complémentaires de connexion sont formés de deux plaques (25) destinées, lors de la fixation du capteur (1) sur le capot (3), à venir en appui chacune sur les moyens internes de connexion.

17. Capteur selon la revendication 16, **caractérisé en ce que** les plaques (25) sont surmoulées dans le corps de sorte à être associées à lui et à laisser une de leurs faces libre.

18. Capteur selon l'une quelconque des revendications 13 à 17, **caractérisé en ce qu'**un joint torique (26) est disposé autour du corps.

19. Ensemble comprenant un système de fixation selon l'une quelconque des revendications 1 à 11 et, fixé et connecté sur le capot (3) dudit système, un capteur (1) selon l'une quelconque des revendications 12 à 18.

20. Ensemble selon la revendication 19, **caractérisé en ce que** le capteur (1) est associé au capot (3) de sorte à permettre une lecture radiale des informations.

21. Ensemble selon la revendication 19, **caractérisé en ce que** le capteur (1) est associé au capot (3) de sorte à permettre une lecture faciale des informations.

22. Roulement du type comprenant une bague fixe (4), une bague tournante (29) et des corps roulants (30) disposés entre lesdites bagues, dans lequel un codeur (2) générateur d'impulsions est associé à la bague tournante (29), ledit roulement étant **caractérisé en ce qu'**il est équipé d'un ensemble selon l'une quelconque des revendications 19 à 21, le capot (3) dudit ensemble étant associé à la bague fixe (4).
